# EUROPEAN PATENT SPECIFICATION

(11) **EP 2 673 152 B1**
(45) Date of publication and mention of the grant of the patent: **07.12.2016**
(21) Application number: 12705239.7
(22) Date of filing: 09.02.2012
(51) Int. Cl.: B60H 3/06, B60H 1/00

(54) **HVAC SYSTEM FOR A WORK VEHICLE**
HVAC-SYSTEM FÜR EIN ARBEITSFAHRZEUG
SYSTÈME DE CHAUFFAGE, DE VENTILATION ET DE CONDITIONNEMENT D'AIR (HVAC) POUR UN VÉHICULE DE TRAVAIL

(30) Priority: 11.02.2011 US 201161463061 P; 11.02.2011 US 201161463059 P; 11.02.2011 US 201161463112 P; 26.05.2011 US 201113116495; 26.05.2011 US 201113116050; 29.08.2011 US 201113220250
(43) Date of publication of application: 18.12.2013
(73) Proprietor: CNH Italia S.p.A., 10135 Turin (IT)
(72) Inventor: TAYLOR, Lance A., Wichita, Kansas 67226 (US); LEUPOLD, Alan G., Plainfield, Illinois 60586 (US)
(74) Representative: CNH Industrial IP Department
(86) International application number: PCT/EP2012/052215
(87) International publication number: WO 2012/107521

(56) References cited:
- WO-A1-2010/049381
- US-A- 4 120 527
- US-A- 4 612 975

## Description

### Technical Field

The present invention generally relates to HVAC systems and, more particularly, to an HVAC system for use with an operator cab of a work vehicle.

### Background Art

A work vehicle, such as a skid steer or wheel loader is commonly used to load and move substantial volumes of dirt and like material from one location to another. A conventional wheel loader includes a relatively large frame that is supported for self-propelled movement over land by pairs of air-filled pneumatic tires or tracks and has a bucket or implement mounted to one end thereof. The bucket or implement can be selectively elevated to a position above side panels on a wheel loader and can be selectively tilted to "dump" materials therefrom.

To enhance operator comfort, a heating, ventilation and air conditioning (HVAC) system can be incorporated into an operator cab. However, filters associated with the HVAC systems in conventional work vehicles are typically arranged such that removal of the filters is a difficult, labour-intensive task, and that the filters are typically positioned in or near the roof of the cab and must be accessed from exterior of the cab. In addition, due to the elevated vertical position of the filter, difficulty associated with installation/removal is further increased.

Examples of this and other HVAC arrangements can be found in US4120527, US4048911 and WO2010/049381 A1.

In some arrangements, the filter is positioned such that during filter replacement, particulate matter that has accumulated in and/or on the filter cannot be removed without spilling a significant portion of the particulate matter in a portion of the HVAC system or the cab. Debris from the filter which falls into fans, motors, condensers, conduits, and so forth, may interfere or clog these apparatus, resulting in breakdown of the HVAC system. Further, debris which falls into the cab may result in recirculation of the debris within the air, resulting in poor air quality for the operator. Further debris falling from the filter into the cab may result in a mess that requires subsequent cleaning of the cab, as well as the hands and/or clothing of the maintenance personnel.

Thus, there is a need and a desire for an HVAC system for use in a work vehicle that is easily accessible and which can be removed without spilling the particulate matter collected by the filter being replaced.

### Disclosure of Invention

Other features and advantages of the present invention will be apparent from the following more detailed description of the preferred embodiment, taken in conjunction with the accompanying drawings which illustrate, by way of example, the principles of the invention.

According to the present invention there is provided a work vehicle as set forth in Claim 1 of the appended claims.

An advantage of the present invention is an HVAC system that is easily accessible and which can be removed without spilling the particulate matter collected by the filter being replaced.

Numerous other features and advantages of the present invention will become readily apparent from the following detailed description, the accompanying drawings, and the appended claims.

### Brief Description of Drawings

FIG. 1 is a forward-looking upper perspective view of an exemplary embodiment of a work vehicle including an HVAC system of the present disclosure;
FIG. 2 is a cross section taken along line 2-2 of FIG. 1 of the present disclosure;
FIG. 3 is a cross section taken along line 3-3 of FIG. 1 of the present disclosure;
FIGS. 4-6 are front views showing different stages of assembly of the HVAC system of the present disclosure;
FIG. 7 is a cross section taken along line 7-7 of FIG. 3 of the present disclosure; and
FIG. 8 is a perspective view of an exemplary embodiment of a filter of the present disclosure.

### Best Mode for Carrying Out the Invention

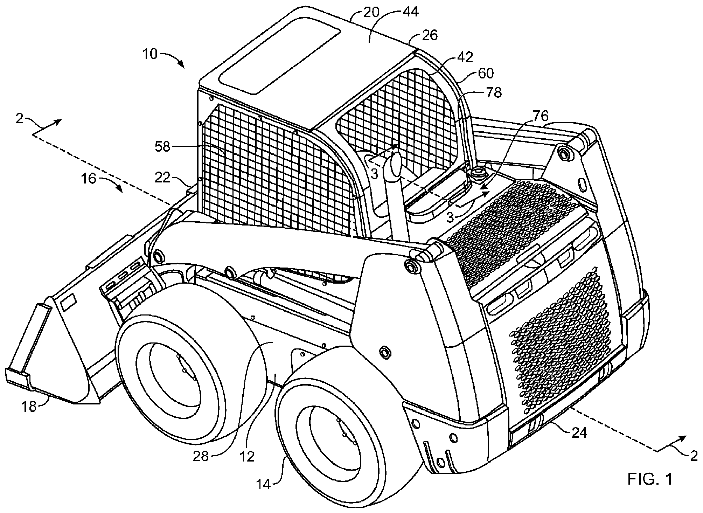

FIG. 1 shows a work vehicle 10 provided with a frame 12 that rotatably carries a driving device 14, such as a plurality of wheels, although in another embodiment, tracks may be used or activated to selectably move the vehicle. A lifting structure 16 includes an arrangement of structural members and actuators controllable by an operator (not shown) to manipulate an implement 18 to perform work. Frame 12 structurally supports an operator cab 20 or cab to surround and protect the operator, which frame 12 includes a front end 22 facing implement 18 and an opposed back end 24 with ends 22, 24 positioned between opposed lateral sides 26, 28 of the frame.

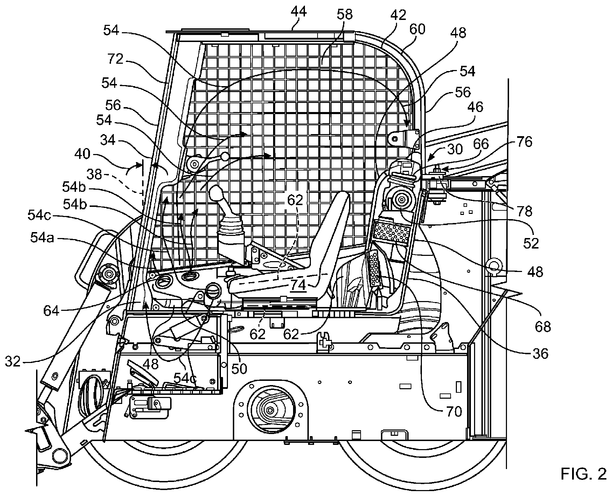

FIGS. 2-3 show different views of cab 20 and associated structure. Cab 20 includes an HVAC system 30 to provide environmental comfort to an operator positioned within the cab. In addition, HVAC system 30, in combination with unique structural features of cab 20, provides a flow of re-circulating air 54 from within cab 20 in combination with a flow 76 of ambient air exterior of the cab that is sufficient to remove a non-transparent layer 56 of a phase of evaporable matter forming on a surface of a forward viewing region 34, a rear viewing region 42 and side viewing regions 58. For purposes of the disclosure, circulating air or circulating airflow as well as re-circulating flow and re-circulating airflow or the like may be used interchangeably. The HVAC system 30 is desirably at least partially contained within an interior of a cab. Of The phrase "partially contained" as used herein means at least about 50 percent or more contained within the cab 20. More desirably, the HVAC system 30 is substantially contained within an interior of the cab 20. "Substantially contained" as used herein means at least about 90 percent or more contained within the cab 20.

Cab 20 includes a forward portion 32 for supporting a forward viewing region 34, such as a substantially transparent door, which not only provides an operator with enhanced viewing capability, but also providing an enclosure so that HVAC system 30 may be utilized to provide environmental comfort to the operator. Side viewing region 58 extends from forward portion 32 to rear portion 36 of the cab 20. In one embodiment, side viewing region 58 is composed of a substantially transparent material, such as tempered glass, to provide operator viewing capability, while also providing an enclosure for operator comfort. Cab 20 has a rear portion 36 that includes a rear viewing region 42, provided for similar reasons as the forward viewing region 34 and side viewing regions 58.

Forward viewing region 34 is oriented at an angle 40 with respect to a vertically directed line 38. As shown in FIG. 2, angle 40 is upwardly sloped toward rear portion 36. As further shown in FIG. 2, forward viewing region 34 is substantially planar, although in another embodiment the forward viewing region may include a curved profile so the angle between a vertically directed line 38 and its forward viewing region may vary, but will generally define an acute angle between the forward viewing region 34 and rear viewing region 36. With forward viewing region 34 of 20 having a planar profile and a substantially horizontal top 44, the forward viewing region and top form an obtuse angle therebetween. Additionally, as shown in FIG. 2, side viewing regions 58 are substantially planar, although in another embodiment the side viewing regions may include a curved profile.

In contrast to forward viewing region 34 and side viewing regions 58, rear viewing region 42 that extends between top 44 and rear portion 36 of the cab includes a significant curved profile. Curved cab structure 60 is provided to effectively provide lateral support to rear viewing region 42. Additionally, by virtue of the radius of curvature of cab structure 60 being substantially the same as the radius of curvature of rear viewing region 42, curved cab structure provides continuous lateral support to rear viewing region 42. Rear viewing region 42 terminates along rear portion 36 in close proximity to inlet 46 of HVAC system 30.

HVAC system 30 includes a conduit 48 having a louvered inlet 46 positioned along an upper portion of the conduit, with inlet 46 positioned beneath, but in close proximity to rear viewing region 42. As further shown in FIGS. 2-3, conduit 48 is positioned substantially centred along the rear portion 36 of the cab behind the operator. Conduit 48 includes a filter 66 in close proximity to inlet 46, an air moving device 52, such as a fan, near the filter, as well as heat exchangers 68, 70, corresponding to respective condenser and evaporator coils of the HVAC system to condition the air to provide operator comfort.

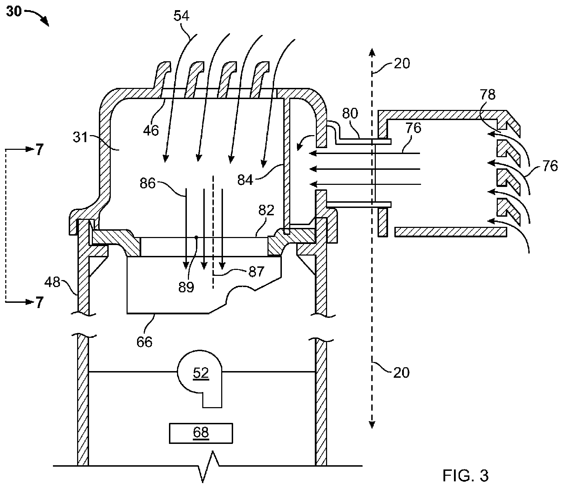

As further shown in FIGS. 2-4, conduit 48 further extends to bifurcated portions 62 that extend along opposite sides of cab 20. Each bifurcated portion 62 of conduit 48 further extends to forward portion 32 of cab 20 having a forward cab structure 72 that supports forward viewing region 34. Each of the bifurcated portions 62 further includes a plurality of outlets 50 formed in the bifurcated portions located in close proximity to the forward portion 32. At least one outlet of the plurality of outlets 50 includes directionally adjustable louvers 64 to selectably control the direction of airflow from the outlet(s). As shown in FIG. 2, which corresponds to the right-hand portion of cab 20 from the perspective of an operator seated in the cab (the left-hand portion of the cab being symmetric to the right-hand portion), the plurality of outlets 50 is located near forward portion 32 and beneath side viewing regions 58 in substantial vertical alignment with an operator chair 74. As further shown in FIG. 3, the plurality of outlets 50 includes three outlets, generating initial respective airflows 54a, 54b, 54c that collectively define a circulating airflow 54 that flows from the plurality of outlets toward inlet 46.

FIGS. 2-3 further show exterior ambient airflow 76 exterior of cab 20 enters inlet 78, is directed via a tube 80 to a baffle 84 prior to entering chamber 31. Once interior re-circulated airflow 54 and ambient airflow 78 are mixed together in chamber 31, becoming combined or mixed airflow 86, the combined or mixed airflow 86 is desirably, but not by way of limitation, directed substantially vertically along a vertical axis 87 through outlets 82 including a filter 66 prior to circulation in the cab 20 by air moving device 52. Chamber 31 is desirably at least 95 percent contained within the cab 20. As shown in FIG. 3, filter 66 is desirably positioned beneath chamber 31, although the filter may be arranged differently in other embodiments. By virtue of the arrangement of inlets 46, 76 and air moving device 52 associated with the outlet of chamber 31, the flow of air 76 exterior of the cab and the flow of re-circulated air 54 from within the cab are maintainable at a predetermined ratio, enhancing operator comfort. The terms "substantial" and/or "substantially" as used herein relative to a vertical and/or horizontal orientation means plus or minus 30 degrees from the stated orientation or position. For example, a vertical orientation or position may vary by plus or minus 30 degrees; a horizontal orientation or position may also vary by plus or minus 30 degrees. The term "about" as used herein, means plus or minus 5 percent of the stated range.

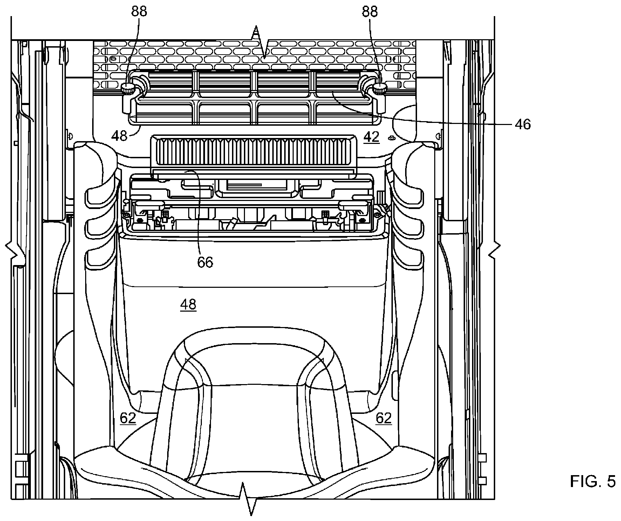

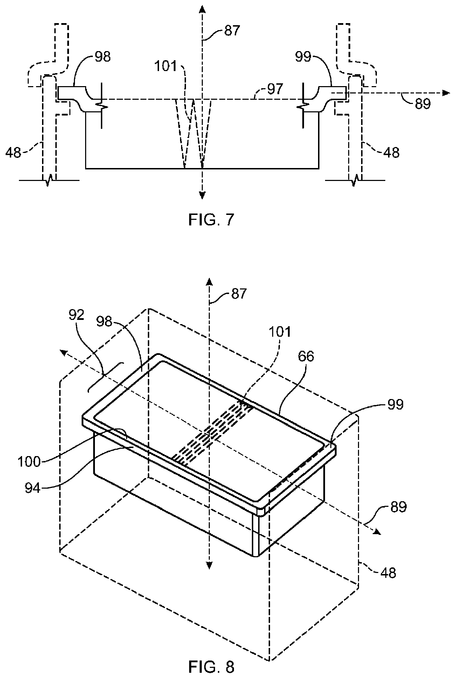

As further shown in FIGS. 3-6, inlet 46 and inlet 78 (FIG. 3) of conduit 48 are substantially vertically aligned with an operator's head, when the operator is in a seated working position interior of cab (see FIG. 2). In this location, upon removal of a portion of conduit 48 that is conveniently within reach of maintenance personnel, filter 66 can be accessed from inside cab 20. That is, filter 66 can be accessed while standing inside cab 20 or kneeling in operator chair 74 (FIG. 2). As shown in FIG. 3, the flow of air 78 exterior of cab 20 and the flow of re-circulated air 54 from within the cab are each downwardly directed through the filter. As further shown in the figures, filter 66 is most desirably oriented in a substantially horizontal position with respect to the substantially vertical mixed airflow 86 which moves out of chamber 31 to filter 66, permitting removal of the filter from cab 20 substantially without spilling particles trapped by the filter. Filter 66, as shown schematically in FIGS. 3, 7 and 8, includes a horizontal axis 89 extending desirably through a centre section 92 thereof. In an alternative embodiment, filter 66 may be oriented at an angle relative to vertical axis 87 and substantially vertical mixed airflow 86. That is, a first longitudinal side 94 of filter 66 may be oriented higher or lower than a second longitudinal side 95. Filter 66 also includes opposite short ends 98, 99.

It will be understood that short ends 98, 99 may also be moved upward or downward (not shown) relative to horizontal axis 87 as well. Even when filter 66 is provided at any angle described and/or illustrated herein, it will be understood that filter 66 provides the ability to trap debris all debris on or in filter 66 so that filter is easily removed by operator in a generally horizontal position so that no debris falls from filter to clog air moving device 52 and/or any portion of the HVAC system 30.

Conduit 48 substantially surrounds an outer perimeter 100 of filter 66. Filter upper surface 96 desirably, but not by way of limitation, includes pleats, or accordion folds 101, which are positioned generally horizontally, and they are desirably, but not by way of limitation, positioned at a 90 degree angle relative to horizontal axis 89. Other surface patterns of filter 66 may also be used, however, surface patterns desirably include concavities and convexities. Filter 66 may include one or more layers of filter material which desirably filters debris such as dust, dirt, ash, and other particulate material, including grass, leaves, and so forth, which desirably are held on the upper surface 96 and/or in the upper layer(s) of filter 66 so that such debris (not shown) is not passed through filter 66 to clog or disrupt the operation of air moving device 52 or any other portion of HVAC system 30. The orientation of filter 66 is desirably such that debris in mixed airflow 86 is retained on or in upper layers of filter 66 such that when filter 66 is lifted out of conduit 48, no debris readily falls into conduit 48 or into cab 20, to cause contamination of the HVAC system 30 or components thereof, or re-circulating airflow 54.

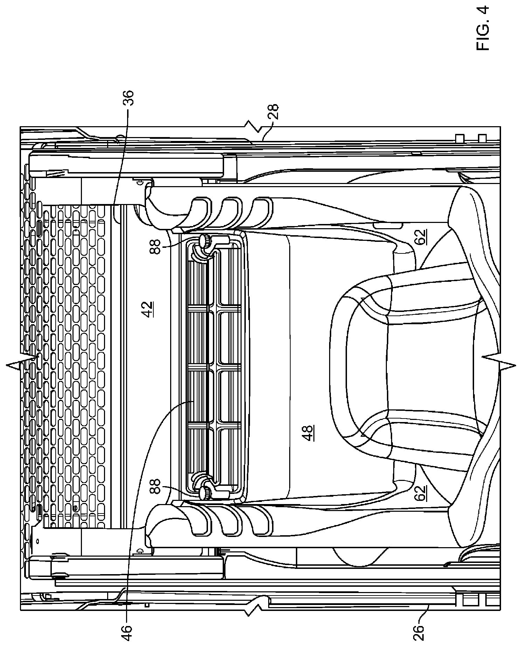

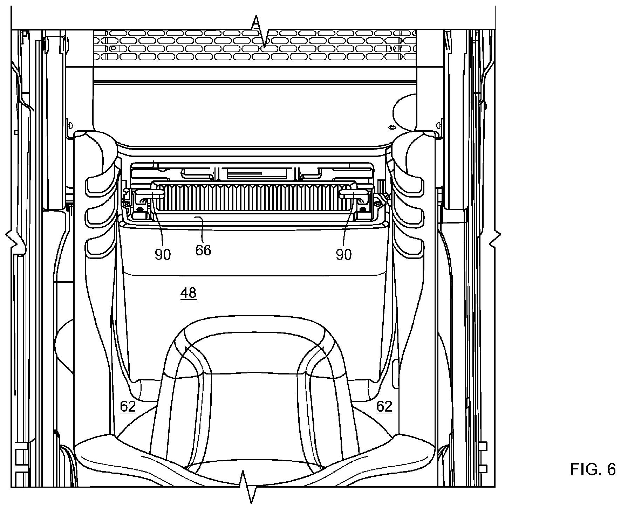

Additionally, a sufficient portion of conduit 48, which includes inlet 78, permits manual removal of filter 66. To that end, conduit 48 may include tabs, lip(s), or other devices such that filter 66 is held in positioned and unable to be inadvertently easily rotated into a vertical position by operator during removal (not shown). As further shown in FIGS. 4-6, conduit 48, which includes inlet 78, comprises a pair of manually removable connectors 88, such as a quick release connector, such as a quarter turn connector, although other connectors or fasteners may be used. As further shown in FIG. 6, in which a portion of conduit 48 that includes inlet 46 is removed for clarity, a pair of retainers 90 secures filter 66 prior to installation of inlet 46.

The interior airflow flow in a circular pattern, as illustrated in FIG. 2, which, for the purpose of the illustration, is a clockwise airflow. The filter 66 and all components of the HVAC system are in a gaseous fluid communication ("fluid communication").

## Claims

1. A work vehicle having an operator cab comprising an operator's chair (74) and an HVAC system, the system being positioned substantially within the cab (20) behind and below the operator's chair (74), a portion of the system having at least one inlet, and a plurality of outlets (50) positioned in front of the operator's chair (74), the system including
a chamber (31) positioned in the interior of the cab and behind an operator's chair (74), the chamber (31) having a first inlet (78) for receiving an exterior airflow (76) from outside of the cab (20), the chamber (31) having a second inlet (46) for receiving an interior re-circulated airflow (54) from air contained within the cab (20), the chamber (31) mixing the exterior airflow (76) with the interior re-circulated airflow (54) to form a mixed airflow (86) which is directed substantially vertically downward out of a chamber outlet (82), **characterised in that** the system further includes:
a filter (66) positioned in a conduit (48) connected to the chamber outlet (82) and in fluid communication with the chamber (31), the first inlet (78), the second inlet (46), and the plurality of outlets (50), the filter (66) positioned below the chamber (31) in a substantially horizontal position relative to the substantially mixed airflow (86) flowing through the chamber (31) to an upper surface (96) of the filter (66), the substantially vertical mixed airflow moving through the filter (66) and through the plurality of outlets (50) in the HVAC system (30) such that airflow from the plurality of outlets (50) circulates over and around the operator's chair (74), providing a generally circular path of airflow about the operator's chair (74), at least a portion of the circular airflow re-entering the chamber (31) as interior re-circulated airflow (54),
wherein the filter (66) is configured to trap debris from the vertical mixed airflow (86) via its orientation and the filter (66) is configured for easy removal by an operator inside of the cab (20), and
wherein the filter (66) is configured to be easily maintained in its substantially horizontal position during removal so that debris retained on the upper surface (96) of the filter (66) does not fall into a portion of the HVAC system (30) or the cab (20) when the filter (66) is removed therefrom.

2. The work vehicle of Claim 1, **characterised in that** a sufficient portion of the chamber (31) is manually removable to permit removal of the filter (66).

3. The work vehicle of Claim 1 or 2, **characterised in that** the chamber (31) comprises a manually removable connector (88).

4. The work vehicle of Claim 3, **characterised in that** the manually removable connector (88) is a quick release connector.

5. The work vehicle of Claim 4, **characterised in that** the quick release connector is a quarter turn connector.

6. The work vehicle of any preceding Claim, **characterised in that** the first inlet (78) and the second inlet (46) are substantially vertically aligned with an operator's head, when the operator is in a seated working position interior of the cab (20).

7. The work vehicle of any preceding Claim, **characterised in that** the exterior airflow (76) from outside of the cab (20) and the interior re-circulated airflow (54) from within the cab (20) are maintainable at a predetermined ratio.

8. The work vehicle of any preceding claim, **characterised in that** the filter (66) is removable from the cab (20) substantially without spilling particles trapped by the filter (66).

## Patentansprüche

1. Ein Arbeitsfahrzeug mit einer Fahrerkabine, die einen Fahrersitz (74) und ein HVAC- (Heizungs-, Lüftungs- und Klimaanlagen-) System umfasst, wobei das System im Wesentlichen innerhalb der Kabine (20) hinter und unterhalb des Fahrersitzes (74) angeordnet ist, wobei ein Teil des Systems zumindest einen Einlass und eine Anzahl von Auslässen (50) aufweist, die vor dem Fahrersitz (74) angeordnet sind, wobei das System Folgendes einschließt:
eine Kammer (31), die in dem Inneren der Kabine und hinter einem Fahrersitz (74) angeordnet ist, wobei die Kammer (11) einen ersten Einlass (78) zum Empfang eines von außen kommenden Luftstroms (76) von der Außenseite der Kabine (20) aufweist, wobei die Kammer (31) einen zweiten Einlass (46) zum Empfang eines umgewälzten Innenluftstroms (54) von der in der Kabine (20) enthaltenen Luft aufweist, wobei die Kammer (31) den von außen kommenden Luftstrom (76) mit dem umgewälzten Innenluftstrom (54) mischt, um einen gemischten Luftstrom (86) zu bilden, der im Wesentlichen in Vertikalrichtung nach unten aus einem Kammer-Auslass (82) gerichtet ist, **dadurch gekennzeichnet, dass** das System weiterhin Folgendes einschließt:
einen Filter (66), der in einer Leitung (48) angeordnet ist, die mit dem Kammer-Auslass (82) verbunden ist und in Strömungsverbindung mit der Kammer (31) steht, wobei der erste Einlass (78), der zweite Einlass (46) und die Anzahl von Auslässen (50) der Filter (66) unterhalb der Kammer (31) in einer im Wesentlichen horizontalen Position bezogen auf den im Wesentlichen gemischten Luftstrom (86) angeordnet sind, der durch die Kammer (31) zu einer oberen Oberfläche (96) des Filters strömt, wobei sich der im Wesentlichen vertikale gemischte Luftstrom durch den Filter (66) und durch die Anzahl von Auslässen (50) in dem HVAC-System (30) hindurch derart bewegt, dass der Luftstrom von der Anzahl der Auslässe (50) über und um den Fahrersitz (74) herum zirkuliert, wobei ein allgemein kreisförmiger Pfad des Luftstroms um den Fahrersitz (74) geschaffen wird, wobei ein Teil des kreisförmigen Luftstroms in die Kammer (31) als umgewälzter Innenluftstrom (54) zurückkehrt,
wobei der Filter (66) so konfiguriert ist, dass er Schmutz von dem vertikalen gemischten Luftstrom (86) über seine Ausrichtung abfängt und der Filter (66) für eine einfache Entfernung durch einen Benutzer innerhalb der Kabine (20) konfiguriert ist, und
wobei der Filter (66) so konfiguriert ist, dass er während seiner Entfernung leicht in seiner im Wesentlichen horizontalen Position gehalten werden kann, so dass auf der oberen Oberfläche (96) des Filters (66) festgehaltener Schmutz nicht in einen Teil des HVAC-Systems (30) oder die Kabine (20) fällt, wenn der Filter (66) aus dieser entfernt wird.

2. Das Arbeitsfahrzeug nach Anspruch 1, **dadurch gekennzeichnet, dass** ein ausreichender Teil der Kammer (31) manuell entfernbar ist, um eine Entfernung des Filters (66) zu ermöglichen.

3. Das Arbeitsfahrzeug nach Anspruch 1 oder 2, **dadurch gekennzeichnet, dass** die Kammer (31) einen manuell entfernbaren Verbindungsteil (88) aufweist.

4. Das Arbeitsfahrzeug nach Anspruch 3, **dadurch gekennzeichnet, dass** der manuell entfernbare Verbindungsteil (88) eine Schnellkupplung ist.

5. Das Arbeitsfahrzeug nach Anspruch 4, **dadurch gekennzeichnet, dass** die Schnellkupplung eine Viertel-Umdrehungs-Verbindung ist.

6. Das Arbeitsfahrzeug nach irgendeinem der vorhergehenden Ansprüche, **dadurch gekennzeichnet, dass** der erste Einlass (78) und der zweite Einlass (46) im Wesentlichen vertikal mit dem Kopf eines Fahrers ausgerichtet sind, wenn sich der Fahrer in einer sitzenden Arbeitsposition im Inneren der Kabine (20) befindet.

7. Das Arbeitsfahrzeug nach irgendeinem der vorhergehenden Ansprüche, **dadurch gekennzeichnet, dass** der von außen kommende Luftstrom (76) von der Außenseite der Kabine (20) und der umgewälzte Innenluftstrom (54) vom Inneren der Kabine (20) auf einem vorgegebenen Verhältnis zu halten sind.

8. Das Arbeitsfahrzeug nach irgendeinem der vorhergehenden Ansprüche, **dadurch gekennzeichnet, dass** der Filter (66) aus der Kabine (20) im Wesentlichen ohne das Verstreuen von Teilchen entfernbar ist, die von dem Filter (66) abgefangen wurden.

## Revendications

1. Véhicule de travail comportant une cabine de conducteur comprenant un siège de conducteur (74) et un système CVC, le système étant positionné en grande partie à l'intérieur de la cabine (20) derrière et en dessous du siège de conducteur (74), une partie du système comportant au moins une entrée et une pluralité de sorties (50) positionnées à l'avant du siège de conducteur (74), le système incluant
une chambre (31) positionnée à l'intérieur de la cabine et derrière le siège de conducteur (74), ladite chambre (31) comportant une première entrée (78) pour recevoir un flux d'air extérieur (76) depuis l'extérieur de la cabine (20) et comportant une seconde entrée (46) pour recevoir un flux d'air intérieur remis en circulation (54) provenant de l'air contenu dans la cabine (20), et ladite chambre (31) mélangeant le flux d'air extérieur (76) avec le flux d'air intérieur remis en circulation (54) pour former un flux d'air mélangé (86) qui est dirigé sensiblement verticalement vers le bas depuis une sortie de chambre (82), **caractérisé en ce que** le système comprend en plus :
un filtre (66) positionné dans un conduit (48) connecté à la sortie (82) de chambre et en communication fluidique avec la chambre (31), la première entrée (78), la seconde entrée (46) et la pluralité de sorties (50), le filtre étant positionné en dessous de la chambre (31) dans une position sensiblement horizontale par rapport au flux d'air essentiellement mélangé (86) s'écoulant à travers la chambre (31) jusqu'à une surface supérieure (96) du filtre (66), le flux d'air mélangé sensiblement vertical circulant à travers le filtre (66) et à travers la pluralité de sorties (50) dans le système CVC (30) de telle sorte que le flux d'air provenant de la pluralité des sorties (50) circule au-dessus et autour du siège de conducteur (74), en procurant une trajectoire généralement circulaire de flux d'air autour du siège de conducteur (74), au moins une partie du flux d'air circulaire réentrant dans la chambre (31) sous forme de flux d'air intérieur remis en circulation (54),
dans lequel le filtre (66) est conçu pour piéger les débris provenant du flux d'air vertical mélangé (86) par son orientation et le filtre (66) est conçu pour un enlèvement facile par un conducteur à l'intérieur de la cabine (20) et
dans lequel le filtre (66) est conçu pour être facilement maintenu dans sa positon sensiblement horizontale pendant son enlèvement de sorte que les débris retenus sur la surface supérieure (96) du filtre (66) ne tombent pas dans une partie du système CVC (30) ou dans la cabine (20) lorsqu'on enlève le filtre (66) de celui-ci.

2. Véhicule de travail selon la revendication 1, **caractérisé en ce qu'**une partie suffisante de la chambre (31) peut être enlevée manuellement pour permettre d'enlever le filtre (66).

3. Véhicule de travail selon la revendication 1 ou 2, **caractérisé en ce que** la chambre (31) comprend un raccord amovible manuellement (88).

4. Véhicule de travail selon la revendication 3, **caractérisé en ce que** le raccord amovible manuellement (88) est un raccord à déconnexion rapide.

5. Véhicule de travail selon la revendication 4, **caractérisé en ce que** le raccord à déconnexion rapide est un raccord à quart de tour.

6. Véhicule de travail selon l'une quelconque des revendications précédentes, **caractérisé en ce que** la première entrée (78) et la seconde entrée (46) sont sensiblement alignées verticalement avec la tête d'un conducteur, lorsque le conducteur est en position de travail assise à l'intérieur de la cabine (20).

7. Véhicule de travail selon l'une quelconque des revendications précédentes, **caractérisé en ce que** le flux d'air extérieur (76) provenant de l'extérieur de la cabine (20) et le flux d'air intérieur remis en circulation (54) depuis l'intérieur de la cabine (20) peuvent être maintenus à un rapport prédéterminé.

8. Véhicule de travail selon l'une quelconque des revendications précédentes, **caractérisé en ce que** le filtre (66) peut être enlevé de la cabine (20) sensiblement sans répandre de particules piégées par le filtre (66).
